(19) Europäisches Patentamt / European Patent Office / Office européen des brevets

(11) **EP 4 183 260 A1**

(12) **EUROPEAN PATENT APPLICATION**

(43) Date of publication:
**24.05.2023  Bulletin 2023/21**

(21) Application number: **21306612.9**

(22) Date of filing: **19.11.2021**

(51) International Patent Classification (IPC):
$A23G\ 4/06$ (2006.01)    $A61K\ 33/10$ (2006.01)
$C01F\ 11/18$ (2006.01)    $C08K\ 3/26$ (2006.01)
$C09C\ 1/02$ (2006.01)

(52) Cooperative Patent Classification (CPC):
**C09C 1/30; A23G 3/362; A23G 4/064; C01F 11/18; C08K 3/26; C09C 1/0093; C09C 1/021;**
C01P 2004/42; C01P 2006/12; C01P 2006/19

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ImerTech SAS**
**75015 Paris (FR)**

(72) Inventors:
• **Pagis, Laure**
  **31500 Toulouse (FR)**
• **Borras, Adrien**
  **31300 Toulouse (FR)**

(74) Representative: **Haseltine Lake Kempner LLP**
**Bürkleinstrasse 10**
**80538 München (DE)**

(54) **A COATING COMPOSITION COMPRISING CALCIUM SILICATE AND PRECIPITATED CALCIUM CARBONATE PARTICULATE MATERIAL**

(57)   The present disclosure relates to a coating composition comprising calcium silicate and precipitated calcium carbonate particulate material, a suspension comprising the coating composition and at least one solvent, an article which is at least partially coated with the coating composition or the suspension, and a process for producing an article, wherein the article is at least partially coated with the suspension, and use of the coating composition comprising calcium silicate and precipitated calcium carbonate particulate material.

Fig. 1(a)

**(Cont. next page)**

EP 4 183 260 A1

Fig. 1(b)

Fig. 1(c)

**Description**

FIELD OF THE INVENTION

The present invention is directed to a coating composition comprising calcium silicate and precipitated calcium carbonate (PCC) particulate material, a suspension comprising the coating composition, an article which is at least partially coated with the coating composition or suspension, a process for producing an article wherein the article is at least partially coated with the suspension, and uses of the coating composition.

BACKGROUND OF THE INVENTION

Due to the advantageous properties of titanium dioxide ($TiO_2$) pigments, such as high brightness and good covering power, titanium dioxide pigments are widely use in coating compositions. As well as the provision of desirable aesthetic coating properties such as whiteness and opacity, coating compositions containing titanium dioxide tend to be easy to formulate and exhibit good mechanical properties during processing and result in no, or only minimal, cracking.
However, in recent years health concerns have arisen regarding the use of titanium dioxide, such as the carcinogenicity of pigment grade titanium dioxide. There has, therefore, been attempts made to at least partially replace titanium dioxide in a number of applications. The replacement of titanium dioxide with minerals with lower toxicity has proven to be rather challenging as replacement minerals often fail to match the combination of properties demonstrated by titanium dioxide.
It is therefore desirable to provide a filler or pigment, or a mixture thereof that is suitable for at least partial replacement of titanium dioxide in coating compositions, whilst maintaining suitable aesthetic and/or mechanical properties of the coating composition.

SUMMARY OF THE INVENTION

The present invention is defined in the appended claims.
In accordance with a first aspect, there is provided coating composition comprising calcium silicate and precipitated calcium carbonate particulate material.
In accordance with a second aspect, there is provided a suspension comprising the coating composition according to the first aspect and at least one solvent.
In accordance with a third aspect, there is provided an article at least partially coated with the coating composition according to the first aspect or the suspension according to the second aspect.
In accordance with the fourth aspect there is provided a process for producing an article, wherein the article is at least partially coated with the suspension according to the second aspect.
In accordance with a fifth aspect there is provided the use of calcium silicate and precipitated calcium carbonate particulate material as defined in the first aspect for at least partially replacing titanium dioxide.
In accordance with a sixth aspect there is provided the use of calcium silicate and precipitated calcium carbonate particulate material as defined in the first aspect in a coating composition for improving the opacity of coatings and/or reducing crack formation of coatings
Certain embodiments of the present invention may provide one or more of the following advantages:

- possibility of partial or full replacement of titanium dioxide by calcium silicate and precipitated calcium carbonate particulate material according to the present disclosure
- desired opacity
- desired whiteness
- desired minimal weight gain upon coating, such as when coating tablets
- coatings showing no or only negligible crack formation
- desired easy of process processing with good efficiency of coating (e.g. >50%)

The details, examples and preferences provided in relation to any particular aspect of the present invention apply equally to all aspects of the present invention. Any combination of the embodiments, examples and preferences described herein in all possible variations thereof are encompassed by the present invention unless otherwise indicated herein, or otherwise clearly contradicted by context.
It is understood that the following description concerns exemplary embodiments of the present disclosure and shall not be limiting the scope of the claims.

BRIEF DESCRIPTION OF THE DRAWINGS

The invention will further be illustrated by reference to the following figures:

Fig. 1(a) to (c)        show microscopic images of precipitated calcium carbonate particulate materials used in the examples of the present disclosure;

Fig. 2(a) and (b)        show microscopic images of further precipitated calcium carbonate particulate materials used in the examples of the present disclosure;

It is understood that the following description and references to the figures concern exemplary embodiments of the present invention and shall not be limiting the scope of the claims.

DETAILED DESCRIPTION

The present invention is based on the surprising finding that a mixture calcium silicate and precipitated calcium carbonate particulate material lead to coating compositions with good properties. The mixture of calcium silicate and precipitated calcium carbonate particulate material have therefore been identified as a suitable replacement, or partial replacement, of titanium dioxide.

**Calcium Silicate**

Calcium silicate is a white free-flowing powder that can be derived naturally such as from limestone and diatomaceous earth. It has many useful properties, such as having a high refractive index and having high whiteness. It does, however, have drawbacks when applied as a coating agent. The coating efficiency of calcium silicate it typically rather low, which limits its use as a coating agent. It has also been observed to be prone to cracks, which, without being bound by theory is considered to be linked to its porosity, low bulk density and high surface area.

In a certain embodiment calcium silicate used in the present invention is a white calcium silicate. White calcium silicate can be obtained by using a flux calcined diatomaceous earth as a silica precursor.

**Precipitated calcium carbonate particulate material**

In certain embodiments, precipitated calcium carbonate particulate material has a low BET surface area. In certain embodiments, the BET surface area of the precipitated calcium carbonate particulate material is about 15 $m^2/g$ or less, for example, less than about 15 $m^2/g$, or about 14 $m^2/g$ or less, or about 13 $m^2/g$ or less, or about 12 $m^2/g$ or less, or about 11 $m^2/g$ or less. Usually, the BET surface area of the precipitated calcium carbonate particulate material is about 1 $m^2/g$ or more, or about 2 $m^2/g$ or more, or about 3 $m^2/g$ or more. For example, the BET surface area of the precipitated calcium carbonate particulate material is from about 1 $m^2/g$ to about 15 $m^2/g$, or from about 1 $m^2/g$ to less than about 15 $m^2/g$ or from about 1 $m^2/g$ to about 14 $m^2/g$, or from about 2 $m^2/g$ to about 13 $m^2/g$, or from about 2 $m^2/g$ to about 12 $m^2/g$, or from about 3 $m^2/g$ to about 11 $m^2/g$.

The surface area of the calcium carbonate particulate material is measured using the BET method according to ISO 9277, by quantitative adsorption of nitrogen on the surface of said particles so as to form a monomolecular layer completely covering said surface.

Precipitated calcium carbonate (PCC) may be produced by any of the known methods available in the art. TAPPI Monograph Series No 30, "Paper Coating Pigments", pages 34-35 describes the three main commercial processes for preparing precipitated calcium carbonate which may be used in the practice of the present disclosure. In all three processes, a calcium carbonate feed material, such as limestone, is first calcined to produce quicklime, and the quicklime is then slaked in water to yield calcium hydroxide or milk of lime. In the first process, the milk of lime is directly carbonated with carbon dioxide gas. This process has the advantage that no by-product is formed, and it is relatively easy to control the properties and purity of the calcium carbonate product. In the second process the milk of lime is contacted with soda ash to produce, by double decomposition, a precipitate of calcium carbonate and a solution of sodium hydroxide. The sodium hydroxide may be substantially completely separated from the calcium carbonate if this process is used commercially. In the third main commercial process the milk of lime is first contacted with ammonium chloride to give a calcium chloride solution and ammonia gas. The calcium chloride solution is then contacted with soda ash to produce by double decomposition precipitated calcium carbonate and a solution of sodium chloride. The crystals can be produced in a variety of different shapes and sizes, depending on the specific reaction process that is used. The three main forms of PCC crystals are aragonite, rhombohedral and scalenohedral.

In the present disclosure, the term "scalenohedral" means that the calcium carbonate particulate material has the shape of double, two-pointed pyramids which are not limited in their number of faces, *e.g.*, may be trigonal, tetragonal, *etc.*

In an exemplary embodiment, the calcium carbonate particulate material is prepared by the following process: According to the present application, an aqueous calcium hydroxide suspension is carbonated at a starting temperature of 25°C to 70°C, or in the range of 35°C to 65°C, or in the range of 45°C to 60°C, for example by blowing a carbon dioxide containing gas. An aqueous calcium hydroxide suspension may be carbonated during at least 90 minutes, for examples at least 100 minutes. The product obtained is then dewatered in order to obtain a slurry with a high solids content, using mechanical or thermal dewatering equipment.

The precipitated calcium carbonate slurry might then be filtered, for example through a vacuum filter, or a press filter, and dried, for instance in an oven, or a flash dryer or a band dryer, or by spraying into a stream of hot air (spray drying), or by the action of radiation such as infrared radiation (epiradiator), preferably in an oven or by the action of radiation such as infrared radiation. The resulting powder might then be further milled, for instance in a pin mill with a milling intensity ranging from 1 000 rpm to 20 000 rpm. The process for making PCC results in very pure calcium carbonate crystals.

In an embodiment, the precipitated calcium carbonate particulate material comprises scalenohedral calcium carbonate particles. For example the precipitated calcium carbonate particulate material comprises about 75 wt.% or more, or about 85 wt.% or more, or about 95 wt.% or more of scalenohedral calcium carbonate particles, based on the total weight of the precipitated calcium carbonate particulate material. In an embodiment the precipitated calcium carbonate particulate material essentially consists of scalenohedral calcium carbonate particles. In this regard "essentially consists" usually denotes that the precipitated calcium carbonate particulate material comprises about 99 wt.% or more of scalenohedral calcium carbonate particles, based on the total weight of the precipitated calcium carbonate particulate material.

In an embodiment, the precipitated calcium carbonate particulate material has an oil absorption, determined according to ISO 787-5, of at least about 50 ml/100 g, for example of at least about 55 ml/100 g, or at least about 60 ml/100 g, at least about 80 ml/100 g, or at least about 95 ml/100 g. Usually, the precipitated calcium carbonate particulate material has an oil absorption, determined according to ISO 787-5, of not more than about 200 ml/100 g, for example not more than about 150 ml/100 g. For example, the precipitated calcium carbonate particulate material may have an oil absorption, determined according to ISO 787-5, of at least about 50 ml/100 g and not more than about 150 ml/100 g, or of at least about 60 ml/100 g and not more than about 110 ml/100 g.

The oil absorption may be determined according to ISO 787-5 and is reported as millilitres of oil per 100 grams of calcium carbonate particulate material (ml/100 g mineral). The used oil is linseed oil.

The oil absorption of a talc particulate may be determined according to ASTM-D 1483-95 or ISO 787-5 using linseed oil. The oil absorption in weight percentage may be calculated as follows:

$$Oil\ Absorption\ (wt.\%) = \frac{Volume\ Oil\ Used\ (mL)\ x\ Specific\ Gravity\ of\ Oil}{Weight\ of\ Sample\ (g)}\ x\ 100$$

The oil absorption in ml/100g may be calculated as follows:

$$Oil\ Absorption\ (mL/100g) = \frac{Volume\ Oil\ Used\ (mL)}{Weight\ of\ Sample\ (g)}\ x\ 100$$

Details of the oil absorption measurement method used in the preparation of the present application are set out in the Examples.

In an embodiment, the precipitated calcium carbonate particulate material has a $d_{50}$ particle size, determined by laser light scattering, of about 10.0 $\mu$m or less, for example, of about 8.0 $\mu$m or less, of about 6.0 $\mu$m or less, of about 5.0 $\mu$m or less, of about 4.0 $\mu$m or less, of about 3.5 $\mu$m or less. For example, the precipitated calcium carbonate particulate material has a $d_{50}$ particle size, determined by laser light scattering, of about 0.5 $\mu$m or more, for example of about 1.0 $\mu$m or more. For example, the precipitated calcium carbonate particulate material has a $d_{50}$ particle size of from about 0.5 to about 10 $\mu$m, or from about 0.5 to about 8.0 $\mu$m, or from about 0.5 to about 6.0 $\mu$m, or from about 0.5 to about 5.0 $\mu$m, or from about 0.5 to about 4.0 $\mu$m, or from about 0.5 to about 3.5 $\mu$m, or from about 0.8 to about 3.5 $\mu$m.

Particle size properties referred to herein for the mineral particulate materials, such as the $d_{50}$ particle size of the calcium carbonate particulate material, are measured by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer 2000 (as supplied by Malvern instruments) provides measurements and a plot of the cumulative percentage by volume of particles having a size, referred to in the art as the "equivalent spherical diameter" (e.s.d), less than given e.s.d values. The mean

particle size $d_{50}$ is the value determined in this way of the particle e.s.d. at which there are 50% by weight of the particles which have an equivalent spherical diameter less than that $d_{50}$ value. For the avoidance of doubt, the measurement of particle size using laser light scattering is not an equivalent method to a sedimentation method.

**Coating compositions**

The coating composition according to the present disclosure comprises calcium silicate and precipitated calcium carbonate particulate material. In certain embodiments the weight ratio of calcium silicate to precipitated calcium carbonate particulate material is from about 1:5 to about 5:1, for example, from about 1:4 to about 4:1, from about 2:7 to about 7:2, from about 1:3 to about 3:1. For example, the weight ratio of calcium silicate to precipitated calcium carbonate particulate material is from about 1:2 to about 4:1, for example from about 2:3 to about 3:2, or from about 2:1 to about 4:1.

In certain embodiments, the coating composition comprises calcium silicate in an amount of about 25 wt.% to about 75 wt.% and precipitated calcium carbonate particulate material in an amount of from about is from about 75 wt.% to 25 wt.%, based on the total weight of calcium silicate and precipitated calcium carbonate particulate material in the coating composition. In some examples, the amount of calcium silicate in the coating composition is about 30 wt.%, about 35 wt.%, about 40 wt.%, about 45 wt.%, about 50 wt.%, about 55 wt.%, about 60 wt.%, about 65 wt.%, or about 70 wt.%, based on the total weight of calcium silicate and precipitated calcium carbonate particulate material in the coating composition. In some examples, the amount of precipitated calcium carbonate particulate material is about 70 wt.%, about 65 wt.%, about 60 wt.%, about 55 wt.%, based on the total weight of calcium silicate and precipitated calcium carbonate particulate material in the coating composition.

As outlined above, the composition comprising calcium silicate and precipitated calcium carbonate particulate material according to the present disclosure may be used to at least partially replace titanium dioxide in coating compositions. In an embodiment, the coating composition according to the present disclosure comprises less than about 10 wt.% of titanium dioxide, for example less than about 5 wt.%, or less than about 2.5 wt.%, or less than about 1.0 wt.% of titanium dioxide, based on the total weight of solids in the coating composition. In an embodiment, the coating composition according to the present disclosure is essentially free of titanium dioxide. In this regard, "essentially free" usually denotes that the coating composition according to the present disclosure comprises less than about 0.1 wt.% of titanium dioxide, based on the total weight of solids in the coating composition. In an embodiment, the coating composition according to the present disclosure is free of titanium dioxide.

In an embodiment, the coating composition according to the present disclosure is a nutraceutical coating composition or a pharmaceutical coating composition or a food coating composition. In some examples, the coating composition is an edible coating composition. In some examples, the coating composition is an edible non-sugar coating composition. In some examples, the coating composition is an edible sugar coating composition, wherein the composition comprises one or more sugars selected from the group of fructose, glucose, sucrose, maltose and mixtures thereof. In some examples, the coating is an edible polyol coating composition the composition comprises one or more polyols selected from the group of mannitol, sorbitol, xylitol, isomalt, glycerol, maltitol, lactitol and mixtures thereof.

In an embodiment, wherein the coating composition is an edible coating composition, the composition may further comprise one or more filmogenic/film-forming polymer selected from the group consisting of cellulose derived polymers, acrylate-based copolymers, methacrylate-based copolymers, homopolymers and copolymers of vinyl alcohols, homopolymers and copolymers of vinyl phenols, homopolymers and copolymers of vinyl esters, homopolymers and copolymers of ethylene oxides, homopolymer and copolymers of maleic acid, collagen, gelatin, alginates, starches, naturally occurring polysaccharides, and mixtures thereof, for example, the polymer may be selected from the group consisting of cellulose derived polymers, such as hydroxypropylcellulose, hydroxyethylcellulose, methylcellulose, ethyl cellulose, hydroxypropyl methylcellulose, cellulose acetate, cellulose acetate phthalate, carboxymethylcellulose, sodium carboxymethylcellulose, hydratecellulose, hydroxypropylmethylcellulose, hydroxypropylmethylcellulose phthalate, polymethacrylate, polyethylacrylate, compolymers of methacrylate and ethyl acrylate, methacrylic acid-ethyl acrylate copolymer, polymethylmethacrylate, copolymers of methacrylate and methylmethacrylate, polyvinylacetate and mixtures thereof. In an embodiment, the polymer is hydroxypropylmethylcellulose or polyvinylacetate; for example, the polymer is hydroxypropylmethylcellulose.

In an embodiment, wherein the coating composition is an edible coating composition, the total amount of polymers is from about 21 wt.% to about 58 wt.%, for example from about 28 wt.% to about 48 wt.%, or from about 33 wt.% to about 43 wt.%, based on the total weight of solids in the edible coating composition.

In an embodiment, wherein the coating composition is an edible coating composition, the edible coating composition comprises one or more additive(s) which may be selected from the group consisting of plasticizers, colourants, surfactants, detackifiers, antioxidants, flavouring agents, sugars, polyols, starches (such as rice starch, corn starch or potato starch), waxes and mixtures thereof. Such additives are usual and well-known in the art.

In an embodiment, wherein the coating composition is an edible coating composition, the total amount of the one or more additive(s) is up to about 30 wt.%, for example up to about 25 wt.%, or up to about 20 wt.%, or up to about 10 wt.%, or up to about 5 wt.%, based on the total weight of solids in the edible coating composition.

In an embodiment, wherein the coating composition is an edible coating composition, the edible coating composition comprises a plasticizer. For example, the edible coating composition comprises a plasticizer in an amount of up to about 30 wt.%, or up to about 25 wt.%, or up to about 20 wt.%, or up to about 15 wt.%, based on the total weight of solids in the edible coating composition. If present, the plasticizer may be present in an amount of at least about 0.5 wt.%, for example of at least about 1.0 wt.%, of at least about 5.0 wt.%, of at least about 10 wt.%, or of at least about 15 wt.%, based on the total weight of solids in the edible coating composition.

Suitable plasticizers are, for example selected from the group consisting of propylene glycol, Glycerol PEG (200 - 600), Acetate ester, such as glyceryl triacetate, triethyl citrate, acetyl triethyl citrate, dibutyl subacetate, phthalate ester, acetylated monoglyceride and mixtures thereof.

**Suspension**

Furthermore, the present disclosure is directed to a suspension comprising the coating composition according to the present disclosure and at least one solvent.

In one embodiment, the solvent is selected from the group consisting of water, alcohols, esters, ketones, chlorinated hydrocarbons and mixtures thereof, for example, the solvent is selected from the group consiting of water, methanol, ethanol, 2-propanol, ethyl acetate, ethyl lactate, methylene chloride and mixtures thereof, or the solvent is selected from the group consiting of water, ethanol, methylene chloride and mixtures thereof. In one embodiment, the suspension according to the present disclosure is an aqueous suspension. In one embodiment, the solvent essentially consists of water, for example, the solvent consists of water.

In one embodiment, the weight of the solvent is from about 60 wt.% to about 97 wt.%, for example, from about 70 wt.% to about 95 wt.%, or from about 80 wt.% to about 95 wt.%, or from about 82 wt.% to about 95 wt.%, based on the total weight of the suspension.

In one embodiment, the suspension according to the present disclosure, has a viscosity, determined using a Brookfield DV-II+Pro viscometer as disclosed herein, of up to about 150 mPa·s, for example of up to about 100 mPa·s, or of up to about 70 mPa·s. Usually, the suspension according to the present disclosure, has a viscosity, determined using a Brookfield DV-II+Pro viscometer as disclosed herein, of about 5 mPa·s or more, or of about 10 mPa·s or more, or of about 15 mPa·s or more. For example, the suspension according to the present disclosure, may have a viscosity, determined using a Brookfield DV-II+Pro viscometer as disclosed herein, of from about 5 mPa·s to about 150 mPa·s, or from about 10 mPa·s to about 100 mPa·s, or from about 15 mPa·s to about 70 mPa·s.

The viscosity is determined using a Brookfield DV-II+Pro viscometer at a temperature of 25°C using number 2 spindle at a spindle speed of 100 rpm.

**Article**

The present disclosure is further directed to an article which is at least partially coated with the coating composition or the suspension according to the present disclosure.

In an embodiment, the article is a nutraceutical product or a pharmaceutical product or a food product. The food product may be articles such as chewing gum or candy. In some examples, the article may be selected from the group consisting of tablets, pellets, capsules, and granules. In some examples the article is a tablet. In an embodiment, the article is a flat tablet or a rounded tablet. The flat tablet may be any flat tablet known in the art. The flat tablet may have a height of up to about 0.2 cm, up to about 0.25 cm, up to about 0.3 cm, up to about 0.35 cm, up to about 0.4 cm, or up to about 0.45 cm. In one example, the flat tablet is a flat-faced plain tablet with a circular face having a diameter of about 0.4 cm, about 0.45 cm, about 0.5 cm, about 0.55 cm, or about 0.6 cm.

In an embodiment, at least about 50%, for example, or at least about 60%, or at least about 70%, or at least about 80%, or at least about 90% of the surface of the article is coated with the coating composition or the suspension according to the present disclosure. In an embodiment, essentially the entire surface of the article, for example the entire surface of the article is coated with the coating composition or the suspension according to the present disclosure.

The difference between the weight of the article after coating and the weight of the article before coating is denoted weight gain.

In an embodiment, the weight gain is from about 0.5 wt.% to about 7.0 wt.%, or from 0.5 wt.% to about 6.0, or from 0.5 wt.% to about 5.0, for example from about 0.8 wt.% to 4.5 wt.%, or from about 1.1 wt.% to about 4.0 wt.%, based on the total weight of the article prior to coating. In an embodiment, the weight gain is 1.8 wt.% or less, 2.0 wt.% or less, 2.2 wt.% or less, 2.5 wt.% or less, 3.5 wt.% or less, 4.0 wt.% or less, 4.5 wt.% or less, or 5.0 wt.% or less.

In an embodiment, the article comprises less than about 0.16 wt.% of titanium dioxide, based on the total weight of the article. For example, the article comprises less than about 0.08 wt.% of titanium dioxide, or less than about 0.04 wt.% of titanium dioxide, or less than about 0.016 wt.% of titanium dioxide, based on the total weight of the article. In an embodiment, the article according to the present disclosure is essentially free of titanium dioxide. In this regard, "essentially free" usually denotes that the coating composition according to the present disclosure comprises less than about 0.0016 wt.% of titanium dioxide. In an embodiment, the article according to the present disclosure is free of titanium dioxide. In a variant of this embodiment, the article is a tablet.

Furthermore, embodiments and variants of the coating composition according to the present disclosure are also embodiment and variants of the suspension according to the present disclosure.

**Process**

The present disclosure is further directed to a process for producing an article, wherein the article is at least partially coated with the suspension according to the present disclosure.

Coating processes are generally known in the art and usually depend on the article to be coated.

In one embodiment, the process comprises the following steps:

- applying the suspension according to the present disclosure to the surface of the article, *e.g.*, by spraying or dipping, optionally, while concomitantly conveying and/or circulating the article;
- drying of the applied suspension, optionally, while concomitantly conveying and/or circulating the article.

In one embodiment, the temperature, when drying the applied suspension, is about 85°C or below, for example about 75°C or below, or about 65°C or below.

In one embodiment, a pan coater is used for coating the article, for example, in case the article is selected from the group consisting of tablets, pellets, capsules and/or granules. In a variant of this embodiment, the drum speed of the pan coater is about 30 rpm or less, for example about 24 rpm or less, or about 22 rpm or less, or about 20 rpm or less, or about 18 rpm or less. Usually, in this variant, the drum speed of the pan coater is about 3 rpm or more.

Uses

The present disclosure is further directed to the use of the coating composition comprising calcium silicate and precipitated calcium carbonate particulate material as defined in the present disclosure for at least partially replacing titanium dioxide in coatings. In certain examples, the present disclosure is directed to the use of the coating comprising calcium silicate and precipitated calcium carbonate particulate material as defined in the present disclosure for at least partially replacing titanium dioxide in coatings of nutraceutical products, pharmaceutical products and/or food products. In some examples the food products may be chewing gum or candy.

In one embodiment, the present disclosure is directed to the use of calcium silicate and precipitated calcium carbonate particulate material as defined in the present disclosure for essentially replacing titanium dioxide in coatings, such as nutraceutical products, pharmaceutical products or food products. In some examples the food products In some examples the food products may be chewing gum or candy. For example, the coating compositions of the present may completely replace titanium dioxide in coatings of nutraceutical products, pharmaceutical products or food products. In some examples the food products may be chewing gum or candy. In this regard, "essentially replacing" denotes that the coating composition according to the present disclosure comprises less than about 0.1 wt.% of titanium dioxide.

The present disclosure is further directed to the use of the precipitated calcium carbonate particulate material as defined in the present disclosure in a coating composition for improving the opacity of coatings and/or reducing crack formation of coatings.

In one embodiment, the opacity of coatings is improved and/or the crack formation of coatings is reduced compared with a comparative coating. A comparative coating is a coating not according to the present disclosure. An example of a comparative coating is a coating, wherein the precipitated calcium carbonate particulate material as defined in the present disclosure is replaced with a calcium carbonate particulate material not as defined in the present disclosure. A further example of a comparative coating is wherein only one of calcium silicate or precipitated calcium carbonate particulate material is used in the coating composition. A further example of a comparative coating is wherein calcium silicate is not used in the coating composition, but is replaced by a different silicate, such as magnesium silicate.

Embodiments and variants of the coating composition according to the present disclosure and the suspension according to the present disclosure are also embodiments and variants of the article, the process and the uses according to the present disclosure.

In some embodiments, coatings according to the present disclosure comprising the calcium silicate and precipitated calcium carbonate particulate material as defined in the present disclosure have high opacity and high crack resistance. Without wishing to be bound by theory, it is considered that this combination of desirable features are obtained with the specific combination of calcium silicate and the precipitated calcium carbonate particulate material according to the invention.

For the avoidance of doubt, the present application is directed to subject-matter described in the following paragraphs:

a. A coating composition comprising calcium silicate and precipitated calcium carbonate particulate material.

b. The coating composition according to paragraph a, wherein the precipitated calcium carbonate particulate material has a BET surface area of about 15 $m^2/g$ or less.

c. The coating composition according to paragraph a or paragraph b, wherein the precipitated calcium carbonate particulate material comprises scalenohedral calcium carbonate particles.

d. The coating composition according to any preceding paragraph, wherein the precipitated calcium carbonate particulate material has an oil absorption of at least about 50 ml/100 g, determined according to ISO 787-5.

e. The coating composition according to any preceding paragraph, wherein calcium silicate and precipitated calcium carbonate particulate material are present in a weight ratio of from about 1:5 to about 5:1.

f. The coating composition according to any one of the preceding paragraphs, comprising less than about 10 wt.% of titanium dioxide, based on the total weight of solids in the coating composition.

g. The coating composition according to paragraph e, which is essentially free of titanium dioxide.

h. The coating composition according to any one of the preceding paragraphs, wherein the coating composition is a nutraceutical coating composition, a pharmaceutical coating composition, or a food coating composition, such as chewing gum or candy.

i. A suspension comprising the coating composition according to any one of the preceding paragraphs and at least one solvent.

j. An article at least partially coated with the coating composition or the suspension according to any one of the preceding paragraphs.

k. The article according to paragraph j, wherein the article is a nutraceutical product, a pharmaceutical product, or a food product, such as chewing gum or a candy.

l. The article according to paragraph k, wherein the article is selected from the group consisting of tablets, pellets, capsules and granules.

m. The article according to paragraph l, wherein the article is a tablet.

n. The article according to paragraph m, wherein the tablet is flat and circular with a diameter of about 0.5 cm and a height of about 0.3 cm.

o. A process for producing an article, wherein the article is at least partially coated with the suspension according to paragraph i.

p. Use of the calcium silicate and precipitated calcium carbonate particulate material as defined in any one of paragraphs a to e for at least partially replacing titanium dioxide in coatings.

q. The use according to paragraph p, wherein the calcium silicate and precipitated calcium carbonate particulate material at least partially replaces titanium dioxide in coatings of nutraceutical products, pharmaceutical products and/or food products.

r. Use of the calcium silicate and precipitated calcium carbonate particulate material as defined in any one of paragraphs a to e in a coating composition for improving the opacity of coatings and/or reducing crack formation of coatings.

EXAM PLES

**Materials**

Precipitated calcium carbonate particulate materials, denoted "PCC" in the following, and their properties are given in Table 1 below.

Table 1:

| PCC Ref No. | Dso particle size [$\mu$m] | Morphology | BET [$m^2$/g] | Oil absorption [ml/100 g] |
|---|---|---|---|---|
| Compound 1 | 3.2 | "Shell family" | 29 | 82 |
| Compound 2 | 2.7 | Scalenohedral | 11 | 61 |
| Compound 3 | 1.9 | Cubic | 17 | 61 |
| Compound 4 | 3 | Scalenohedral | 9 | 105 |
| Compound 5 | 9.7 | Spherical | 70 | 115 |
| Compound 6 | 1.8 | Scalenohedral | 7 | 78 |

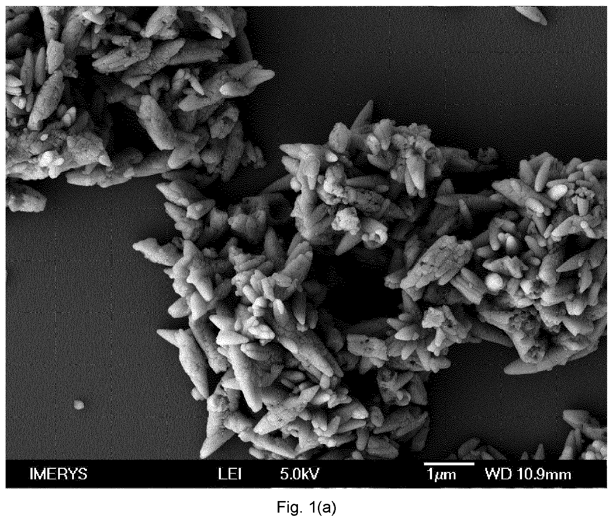

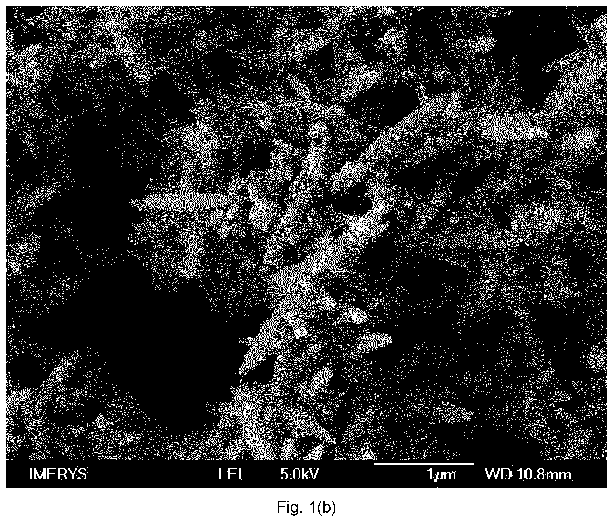

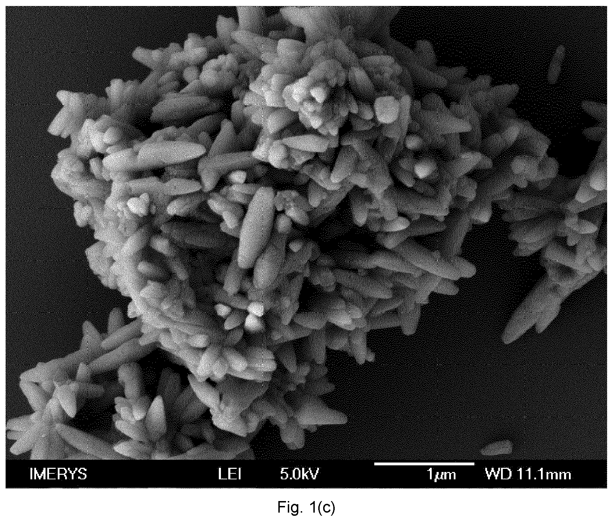

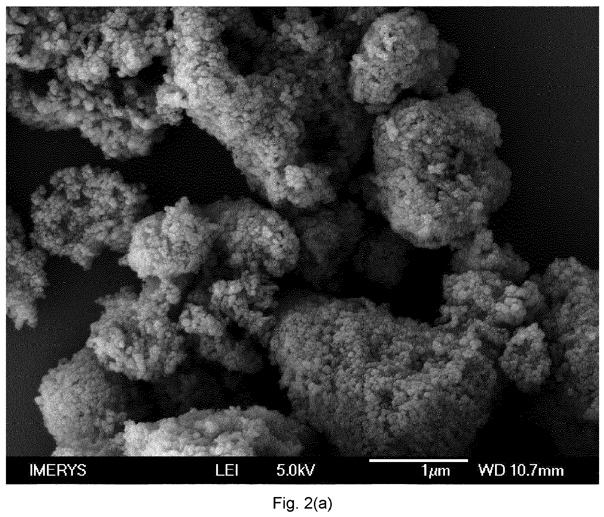

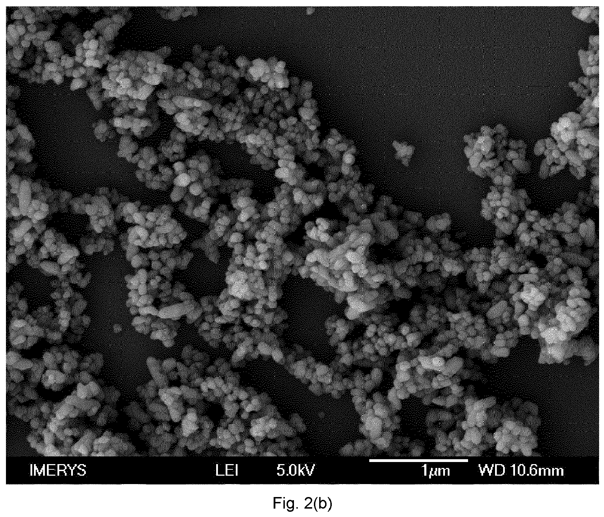

All PCCs of Table 1 are obtainable from Imerys. Fig. 1 (a) to (c) show the scalenohedral structures of (a) Compound 2, (b) Compound 4 and (c) Compound 6. In Fig. 2(a) and (b) the structures of (a) Compound 1 and (b) Compound 3 are shown.

VIVAPHARM® HPMC E5, a hydroxypropylmethylcellulose, obtainable from JRS Pharma, denoted "HPMC" in the following.

Yellow test tablets were obtained from a tablet press through direct compression process .

White calcium silicate was used, denoted "CS" in the following, and has the following properties: $d_{50}$ = 15 $\mu$m, and Specific Surface Area BET = 170 $m^2$/g.

Method for determining Particle Size Distribution (by laser diffraction)

The Particle Size Distribution (PSD) was determined using a Mastersizer 2000 from Malvern instruments.

A sample of mineral particulate was prepared for laser diffraction analysis. The required quantity of mineral particulate was weighed in a 50 ml beaker. A quantity of between 0.2 g and 0.5 g of the mineral particulate was used.

The powder sample was distributed well at the bottom of the beaker. A few drops of ethanol were added to the powder and mixed using a manual stirrer until a paste consistency was achieved. Between 2 ml and 2.5 ml of ethanol was added to the beaker using a 3 ml disposable pipette and the suspension mixed with the manual stirrer. The beaker was placed in an ultrasonic bath for 30 seconds to remove air bubbles.

Laser diffraction analysis was then carried out on the sample using the Mastersizer 2000 with the following settings:

- Sampler: Hydro 2000G
- Measurement theory: Mie 1.589
- Water refraction index: 1.33
- Measurement range: 0.02 - 2000 $\mu$m
- Result calculation model: standard analysis
- Number of snaps:

  Duration of measurement: 8 seconds
  Number of snaps per measurement: 8000 snaps
  Background noise time: 8000 snaps
  Background noise snaps: 8 seconds

- Obscuration limits:

  Low: 5 %
  High: 20 %

- Background noise alarm (value of background noise of detector n°1): below 150 units
- Measurement parameters of the sampler:

    Pump: 1800 rpm
    Stirring: 700 rpm
    Ultra-sonics: 100%

The analysis was carried out as follows:
First, it was checked that the obscuration lower limit was set to 5 % and the obscuration upper limit was set to 20 %. The stirrer speed was set to 700 rpm, the pump to 1800 rpm, and the Ultrasonics to 100 %. The intensity of the laser was checked. If the intensity of the laser was below 77.5%, the following were checked: that the measurement cell was clean; that there were no air bubbles; and that there was no condensation on the measurement cell windows.
The background noise was measured and the intensity of the lasers (red and blue) was measured. Once the lasers were aligned, the intensity of the lasers and the intensity of the background noise (which must be in continuous decline from detector n° 1 to detector n° 51) was checked.

Method for determining BET Specific Surface Area

The BET specific surface area was determined using a method based on the standard NF X 11-621 titled "Determination de l'aire massique (surface specifique) des poudres par adsorption de gaz - Méthode B.E.T. - Mesure volumétrique par adsorption d'azote a basse temperature" (Determination of mass area (specific surface) of powders by gas adsorption - BET Methods - Volumetric measurement by nitrogen adsorption at low temperature).
The method made use of a Micromeritics measurement apparatus (available from Micromeritics Instrument Corp., USA) including a vacuum pump, a VacPrep 061 degassing section, a Tristar 3000S measurement section and sample holders, a Mettler AG204 scale with a precision of 0.1 mg, Dewar flasks, nitrogen adsorbant gas and helium carrier gas.
The sample was weighed (to 0.1 mg accuracy) near the empty sample holder and its mass $M_0$ was recorded in g. The previously homogenised powder sample was then introduced, using a funnel, into the sample holder. Sufficient space (dead volume) was left between the sample and the top of the sample holder to enable free circulation of gas. The sample holder was placed into one of the degassing stations and degassed at 250°C under a primary vacuum of 10 Pa for about 20 minutes. After degassing, a sufficient volume of nitrogen was added to the sample holder to avoid introducing air during transfer of the sample holder from the degassing station to the measurement station.
The sample holder was then attached to the measurement station and a Dewar flask containing liquid nitrogen was placed around the sample holder. The BET measurement was commenced using the device control software. The device then carried out the following operations automatically:

- Vacuum removal of the nitrogen introduced for the transfer of the sample holder;
- Leak test;
- Adding helium carrier gas;
- Measuring the dead volume at ambient temperature;
- Measuring the cold dead volume using liquid nitrogen;
- Helium vacuum removal;
- Leak test;
- Adding nitrogen at 950 mm Hg and measuring the saturation pressure; and
- Acquisition of analysis values.

The instrument's data acquisition and processing software plotted the transformed BET line from 5 measured adsorption points. The Dewar flask and then the sample holder were removed. The apparatus was allowed to return to ambient temperature and then the sample was again weighed (to an accuracy of 0.1 mg) near the sample holder and the weight was recorded as $M_2$ in g. The mass of the test portion of the sample, M, was calculated (in g) according to:

$$M = M_2 - M_0$$

The value M was then introduced into the software calculation program which automatically calculated the BET specific surface area of the sample in $m^2/g$.

Method for determining oil absorption

The oil absorption was determined by measuring the amount of linseed oil necessary to wet the totality of a mass of the sample particulate (i.e. the amount of linseed oil necessary to form a paste which does not crack or run off with the addition of water) according to ISO 787-5.

The equipment used included:

- Graduated burette
- Non-cutting glass plate
- 2 soft spatulas (length 155 mm x width 25 mm)
- 1 crystallizer
- Soapy water
- Balance accurate to 1 mg
- Linseed oil having a specific gravity of 0.93 g/mL

Between 0.5 g to 5 g of the particulate (dependent on the density) was weighed out to produce a sample having a volume of about 10 mL. The mass of the sample was recorded as $M$. The sample was placed on the glass plate. The burette was filled with the linseed oil and the initial volume of oil in the burette was noted as $V_0$. Oil (typically between 3 and 4 drops) was gradually added to the sample using the burette and the sample was mixed using a spatula until a paste was formed. Oil was then added to the paste drop by drop, with the paste being kneaded between the addition of each drop, until a smooth, solid and non-dripping paste was formed. A smooth, solid and non-dripping paste was considered to be formed when the paste could be shaped into a ball without cracking or dripping with the addition of water.

The oil absorption was measured in mL/100g as:

$$Oil\ Absorption\ (mL/100g) = \frac{(V_1 - V_0) \times 100}{M}$$

or in wt. % as:

$$Oil\ Absorption\ (wt.\%) = \frac{(V_1 - V_0) \times 93}{M}$$

**Examples:**

A slurry comprising 38 wt% of HPMC and 62 wt.% of the respective CS and PCC (Compound 4 according to Table 1) was prepared and combined with water such that a suspension comprising 87 wt.% of water was obtained.

Each of these suspensions was used to coat 150 g of the test tablets in a pan coater, obtainable from ProCepT, having a pan volume of 0.35 l a nozzle orifice of 500 $\mu$m and at a drum speed of 18 rpm. The drying was performed in the pan coater at a temperature of 60°C.

Table 2 shows the different coatings mixtures used to coat the test tablets: 75 PCC: 25 CS (Test A); 50 PCC: 50 CS (Test B); 25 PCC: 75 CS (Test C). Tablets were also coated with PCC only (Comp Test PCC), CS only (Comp Test CS) and with $TiO_2$ (Comp Test $TiO_2$)

Opacity was measured using a Spectro2guide (BYK) and the following method: The following 3 values were measured:

i) L* = lightness;
ii) a* = red/green coordinate; and
iii) b* =yellow/blue

The reference sample (a yellow tablet without any film coating) showed the following colour: L*= 99.05, a* = -6.06 and b*= 24.99

The opacity of this tablet is considered to be 0%.

The target sample (tablet containing 0.3% of $TiO_2$) showed the following colour:
L*= 99.64, a* = -2.26 and b*= 8.64

The opacity of this tablet is considered to be 100%.

A well-known index is used to express the opacity, namely ΔE. The distance between the two colours is known ΔE and is an industry standard that is overseen by the International Commission on Illumination.

$$\Delta E_{ab}^* = \sqrt{(L_2^* - L_1^*)^2 + (a_2^* - a_1^*)^2 + (b_2^* - b_1^*)^2}$$

The equation above is used to calculate ΔE for each coated tablet compared to the reference sample, namely:

$$\Delta \text{Etablet} =$$
$$\sqrt{(L^*tablet - L^*reference)^2 + (a^*tablet - a^*reference)^2 + (b^*tablet - b^*reference)^2}$$

The opacity index is:

$$\text{Opacity tablet} = \frac{\Delta \text{Etablet}}{\Delta \text{ETiO2}} * 100$$

Weight gain is determined by measuring the weight of the tablet before and after coating. This was typically carried out by weighing 100 tablets before coating and after coating. The difference in weight between these measurements were taken and divided by 100 to obtain the weight gain of a single tablet.

Crack formation was visually inspected using a microscope model Phenom Pro Suite and a magnification of 1:195. For example, if a single crack was observed, the sample was considered "bad".

As can be seen from Table 2, the coatings according to the invention, namely Test A, Test B and Test C exhibit a good combination of feature. Each of the examples according to the invention have a good opacity and good coating process efficiency even at a low weight gain. These results are comparable to using $TiO_2$ in the coating. Each of Test A, Test B and Test C outperform the use of PCC alone at the same weight gain, which has poor opacity, and CS alone, which has poor coating efficiency.

Table 2:

| | Comp Test PCC | Comp Test PCC | Test A | Test B | Test C | Comp Test CS | Comp Test $TiO_2$ |
|---|---|---|---|---|---|---|---|
| Opacity (%) | 88 | 59 | 79 | 97 | 100 | 100 | 100 |
| Weight gain (%) | 3.6 | 1.8 | 1.8 | 1.8 | 1.8 | 1.8 | 1.6 |
| Mineral (%) | 2.2 | 1.1 | 1.1 | 1.1 | 1.1 | 1.1 | 0.3 |
| Cracks formation | No | No | No | No | Yes | Yes | - |
| Coating process efficiency (%) | 79 | 79 | 50 | 48 | 50 | 36 | 79 |

The coating process efficiency is defined as the ratio of the theoretical weight gain to the weight gain

Theoretical weight gain = (mass of applied solution * solid content ) / mass of all the tablets

**Claims**

1. A coating composition comprising calcium silicate and precipitated calcium carbonate particulate material.

2. The coating composition according to claim 1, wherein the precipitated calcium carbonate particulate material has a BET surface area of about 15 $m^2$/g or less.

3. The coating composition according to claim 1 or claim 2, wherein the precipitated calcium carbonate particulate material comprises scalenohedral calcium carbonate particles.

4. The coating composition according to any preceding claim, wherein the precipitated calcium carbonate particulate material has an oil absorption of at least about 50 ml/100 g, determined according to ISO 787-5.

5. The coating composition according to any preceding claim, wherein calcium silicate and precipitated calcium carbonate particulate material are present in a weight ratio of from about 1:5 to about 5:1.

6. The coating composition according to any one of the preceding claims, comprising less than about 10 wt.% of titanium dioxide, based on the total weight of solids in the coating composition, for example wherein the coating composition is essentially free of titanium dioxide.

7. The coating composition according to any one of the preceding claims, wherein the coating composition is a nutraceutical coating composition, a pharmaceutical coating composition, or a food coating composition, such as chewing gum or candy.

8. A suspension comprising the coating composition according to any one of the preceding claims and at least one solvent.

9. An article at least partially coated with the coating composition or the suspension according to any one of the preceding claims.

10. The article according to claim 9, wherein the article is a nutraceutical product, a pharmaceutical product, or a food product, such as chewing gum or a candy.

11. The article according to claim 10, wherein the article is selected from the group consisting of tablets, pellets, capsules and granules.

12. The article according to claim 11, wherein the article is a tablet, for example, wherein the tablet is flat and circular with a diameter of about 0.5 cm and a height of about 0.3 cm.

13. A process for producing an article, wherein the article is at least partially coated with the suspension according to claim 8.

14. Use of the calcium silicate and precipitated calcium carbonate particulate material as defined in any one of claims 1 to 5 for at least partially replacing titanium dioxide in coatings, for example, wherein the calcium silicate and precipitated calcium carbonate particulate material at least partially replaces titanium dioxide in coatings of nutraceutical products, pharmaceutical products and/or food products.

15. Use of the calcium silicate and precipitated calcium carbonate particulate material as defined in any one of claims 1 to 5 in a coating composition for improving the opacity of coatings and/or reducing crack formation of coatings.

Fig. 1(a)

Fig. 1(b)

IMERYS LEI 5.0kV 1µm WD 11.1mm

Fig. 1(c)

Fig. 2(a)

IMERYS          LEI     5.0kV          1μm    WD 10.6mm

Fig. 2(b)

Europäisches
Patentamt

European
Patent Office

Office européen
des brevets

# EUROPEAN SEARCH REPORT

Application Number

EP 21 30 6612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 623 555 B1 (HAVERINEN JUKKA P [FI] ET AL) 23 September 2003 (2003-09-23)<br>* abstract *<br>* claims 1,5,4,10 *<br>* column 9, lines 42,43 *<br>* column 2, line 47 *<br>* column 6, line 55 – column 6, line 60 *<br>* column 1, line 14 *<br>----- | 1-9,13 | INV.<br>A23G4/06<br>A61K33/10<br>C01F11/18<br>C08K3/26<br>C09C1/02 |
| X | WO 2020/052855 A1 (UNILEVER PLC [GB]; UNILEVER NV [NL]; CONOPCO INC D/B/A UNILEVER [US]) 19 March 2020 (2020-03-19)<br>* abstract *<br>* claims 1-10 *<br>* examples 1-4,B,C *<br>* page 2 – page 4 *<br>* page 5, line 13 – page 5, line 22 *<br>----- | 1-3,5-7 | |
| X | US 9 708 770 B2 (PACIFIC NANO PRODUCTS INC [US]) 18 July 2017 (2017-07-18)<br>* abstract *<br>* claim 1 *<br>* example 7 *<br>* table 29 *<br>* figures 9,22 *<br>----- | 1-3,5-9, 13-15 | TECHNICAL FIELDS SEARCHED (IPC)<br><br>A23G<br>C09C<br>C08K<br>A61K<br>C01G<br>C01F |
| X | US 2021/244043 A1 (ANDERSON BRENT [US] ET AL) 12 August 2021 (2021-08-12)<br>* abstract *<br>* claims 1-18 *<br>* examples 1,2 *<br>----- | 1-15 | |

The present search report has been drawn up for all claims

| Place of search | Date of completion of the search | Examiner |
|---|---|---|
| The Hague | 20 April 2022 | Mertins, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

EP 4 183 260 A1

## ANNEX TO THE EUROPEAN SEARCH REPORT
## ON EUROPEAN PATENT APPLICATION NO.

EP 21 30 6612

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2022

| Patent document cited in search report | | Publication date | Patent family member(s) | | Publication date |
|---|---|---|---|---|---|
| US 6623555 | B1 | 23-09-2003 | BR | 0106683 A | 30-04-2002 |
| | | | CA | 2380424 A1 | 06-12-2001 |
| | | | EP | 1297074 A1 | 02-04-2003 |
| | | | JP | 5490345 B2 | 14-05-2014 |
| | | | JP | 2003535184 A | 25-11-2003 |
| | | | US | 6623555 B1 | 23-09-2003 |
| | | | WO | 0192422 A1 | 06-12-2001 |
| WO 2020052855 | A1 | 19-03-2020 | BR | 112021002528 A2 | 04-05-2021 |
| | | | CN | 112689499 A | 20-04-2021 |
| | | | EP | 3849507 A1 | 21-07-2021 |
| | | | WO | 2020052855 A1 | 19-03-2020 |
| US 9708770 | B2 | 18-07-2017 | CA | 2941374 A1 | 30-10-2014 |
| | | | CN | 105377575 A | 02-03-2016 |
| | | | EP | 2988955 A2 | 02-03-2016 |
| | | | PL | 2988955 T3 | 14-02-2022 |
| | | | US | 2014318418 A1 | 30-10-2014 |
| | | | US | 2015050487 A1 | 19-02-2015 |
| | | | US | 2017058458 A1 | 02-03-2017 |
| | | | US | 2017204270 A1 | 20-07-2017 |
| | | | US | 2019048197 A1 | 14-02-2019 |
| | | | WO | 2014176579 A2 | 30-10-2014 |
| US 2021244043 | A1 | 12-08-2021 | CN | 112334016 A | 05-02-2021 |
| | | | EP | 3806664 A1 | 21-04-2021 |
| | | | US | 2021244043 A1 | 12-08-2021 |
| | | | WO | 2019241478 A1 | 19-12-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- TAPPI Monograph Series No 30. *Paper Coating Pigments,* 34-35

- Determination de l'aire massique (surface specifique) des poudres par adsorption de gaz - Méthode B.E.T. - Mesure volumétrique par adsorption d'azote a basse temperature. *BET Methods*